Europäisches Patentamt

European Patent Office

Office européen des brevets

(11) Veröffentlichungsnummer: **0 088 149**
**B1**

(12) **EUROPÄISCHE PATENTSCHRIFT**

(45) Veröffentlichungstag der Patentschrift:
**06.11.85**

(21) Anmeldenummer: **82106218.9**

(22) Anmeldetag: **12.07.82**

(51) Int. Cl.⁴: **F 16 L 23/00**

(54) **Verbindungsprofil zur Verbindung von Luftkanälen.**

(30) Priorität: **05.03.82 DE 3207990**

(43) Veröffentlichungstag der Anmeldung:
**14.09.83 Patentblatt 83/37**

(45) Bekanntmachung des Hinweises auf die Patenterteilung:
**06.11.85 Patentblatt 85/45**

(84) Benannte Vertragsstaaten:
**AT BE CH FR GB IT LI LU NL SE**

(56) Entgegenhaltungen:
**EP - A - 0 047 467**
**DE - C - 841 090**
**DE - C - 2 313 425**
**DE - U - 8 120 011**

(73) Patentinhaber: **Smitka, Günter, FriedenstraBe 9,
D 5860 Iserlohn 7 (DE)**

(72) Erfinder: **Smitka, Günter, FriedenstraBe 9,
D 5860 Iserlohn 7 (DE)**

(74) Vertreter: **Köchling, Conrad, Dipl.-Ing. et al,
Patentanwälte, Dipl.-Ing. Conrad Köchling Dipl.-Ing.
Conrad-Joachim Köchling Fleyer Strasse 135,
D-5800 Hagen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verbindungsprofil zur stirnseitigen Verbindung von Luftkanälen, wobei die Luftkanäle aus Blechtafeln rechteckigen Zuschnitts zu polygonalen, zum Beispiel rechteckigen Kanälen gebogen und an der Verbindungsnaht gefalzt sind und die Verbindungsprofile einen Einsteckschlitz bildende Schenkel aufweisen, in welche die Stirnseiten der Luftkanäle einschiebbar und zum Beispiel durch Punktschweissen mit den Schenkeln verbindbar sind, wobei ferner die Verbindungsprofile quer zum Einsteckschlitz verlaufende, nach aussen abragende Versteifungsstege aufweisen, die mit entsprechenden Eckwinkeln zur Bildung eines Profilrahmens verbindbar sind.

Derartige Verbindungsprofile sind beispielsweise aus dem deutschen Patent Nr. 2313425 bekannt. Zur Verbindung von Luftkanälen werden aus den Verbindungsprofilen und den entsprechenden Eckwinkeln Profilrahmen zusammengesetzt, die anschliessend mit dem Einsteckschlitz über die entsprechenden Stirnseiten der Luftkanäle geschoben werden. Zur Fixierung dieser aufgrund der Federwirkung der Schenkel lediglich kraftschlüssigen Verbindung werden die Schenkel und der jeweils eingeschobene Blechstreifen des Luftkanals durch Punktschweissen miteinander verbunden. Um eine Wellung der Luftkanalbleche und/oder der Schenkel des Verbindungsprofils aufgrund der thermischen Belastung beim Punktschweissen zu vermeiden, müssen relativ dicke Bleche zur Herstellung der Verbindungsprofile und zur Herstellung der Luftkanäle verwendet werden. Sofern sehr geringe Blechstärken, die an sich aufgrund ihrer Festigkeit ausreichen würden, zur Bildung von Luftkanälen benutzt werden, treten im Bereich der Punktschweissstellen Verwerfungen auf, die zu Undichtigkeiten führen. Darüber hinaus kann sich an diesen Stellen Schmutz ablagern, was unerwünscht ist.

Hiervon ausgehend liegt der Erfindung die Aufgabe zugrunde, ein Verbindungsprofil der eingangs bezeichneten Art zu schaffen, bei dem trotz relativ geringer Blechstärken des Profiles und des damit zu verbindenden Luftkanales Verwerfungen infolge von Punktschweissvorgängen weitestgehend vermieden werden.

Die Lösung dieser Aufgabe ist durch die Merkmale des Kennzeichenteiles des Anspruches 1 gekennzeichnet.

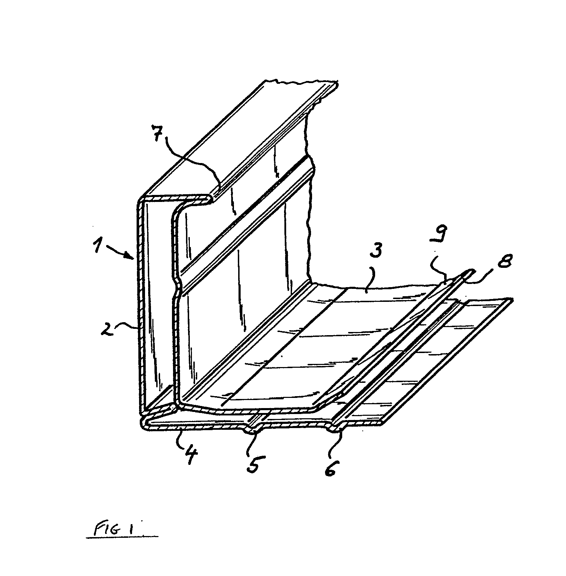

Eine Lösung dieser Aufgabe zeigt auch die DE-C Nr. 841090 in Fig. 2. Deren Verbindungsprofil dient ebenfalls der stirnseitigen Verbindung von Luftkanälen rechteckigen Querschnitts und weist einen mit einer Versteifungssicke versehenen Schenkel auf, der stirnseitig in einen Luftkanal einschiebbar und durch Punktschweissen mit diesem verbindbar ist. Quer zu diesem Schenkel verläuft ein nach aussen abragender Versteifungssteg, dessen endseitige, von der Kanalmündung weg verlaufende Ausformung der Aufnahme einer benachbarte Luftkanäle zusammenhaltenden Klemmeinrichtung dient. Der Versteifungssteg und dessen endseitige Ausformung sind jedoch zu dem in den Luftkanal ragenden Schenkel derart angeordnet, dass ein Punktschweissen des Schenkels zwischen Sicke und Versteifungssteg nicht möglich ist.

Demgegenüber ist am Gegenstand des Anspruchs 1 der dem Versteifungssteg abgewandte Schenkel des Verbindungsprofiles, der nach dem Zusammenbau des Kanales im Inneren des Kanales angeordnet ist, die mindestens eine parallel zur Vorderrandkante des Schenkels verlaufende Sicke in einem solchen Abstand vom Versteifungssteg angeordnet, dass bei einem Punktschweissvorgang der Schweisspunkt zwischen der Sicke und dem Versteifungssteg angeordnet ist. Auf diese Weise wird eine Versteifung des nach dem Zusammenbau des Kanales innenliegenden Schenkels erreicht, mit der auch bei geringer Blechstärke von beispielsweise unter 1 mm die Gefahr des Auftretens von Verwerfungen durch den Punktschweissvorgang schon weitgehend gemindert ist. Die von dem Schweisspunkt ausgehenden Wärmespannungen werden an der Sicke und andererseits an der Abknickkante zum Steg hin abgefangen, so dass der Schenkel des Verbindungsprofiles im wesentlichen ungewellt bleibt. Da die zur Wärmeabfuhr zu nutzende Fläche des Kanalbleches, welches in das Verbindungsprofil eingeschoben ist, erheblich grösser als die Fläche des Verbindungsprofiles ist, können Verzugserscheinungen infolge von Wärmespannungen hierbei schon aufgrund der grossen flächigen Erstreckung der Kanalbleche vermieden werden.

In Weiterbildung schlägt die Erfindung die Merkmalskombination gemäss Anspruch 2 vor. Durch die Anordnung zweier Sicken wird der Verwerfung des Verbindungsprofiles infolge von Wärmespannungen weiter entgegengewirkt, wobei die Sicken vom von den Schenkeln umgrenzten Raum nach aussen durchgebogen sind, so dass sie beim Einschieben des Kanalbleches nicht hinderlich sind.

Vorzugsweise ist die Merkmalskombination nach Anspruch 3 vorgesehen, wobei vorzugsweise die Ausbildung nach Anspruch 4 vorteilhaft ist. Die Sicken sollen dabei einen solchen Abstand voneinander aufweisen, dass mit Sicherheit die Punktschweissstelle zwischen den beiden, parallel verlaufenden Sicken angeordnet ist. Die Sicken fangen so beidseitig der Schweissstelle die entstehenden Materialspannungen auf, so dass es beim innenliegenden Schenkel weder an der Vorderkante noch an der versteifungsstegnahen Hinterkante zu Verwerfungen kommen kann. Darüber hinaus dienen die Sicken auch als Positionierungshilfe beim Schweissen, weil zum Schweissen ein beispielsweise etwa U-förmiges Schweissaggregat vom Steg des Profiles her in das jeweilige Kanalende eingeschoben wird und nachfolgend die Schenkel miteinander und mit dem eingeschobenen Blechstreifen verschweisst werden. Durch die in den Kanalinnenraum vorragenden Sicken ist so eine fühlbare Hilfe beim Einführen und Positionieren des Schweissaggregates gegeben.

Auch kann die Merkmalskombination nach Anspruch 5 vorteilhaft sein, wenn insbesondere darauf geachtet wird, dass die Sicken zumindest in dem beim Punktschweissen von Wärmespannungen belasteten Bereich angeordnet sind.

Bevorzugt ist die Ausbildung gemäss Anspruch 6, insbesondere nach Anspruch 7.

Besonders vorteilhaft ist die Kombination nach Anspruch 8, weil durch die Auskragung des Versteifungssteges eine weitere Positionierungshilfe für das entsprechende Schweissgerät erzeugt wird. Der aussen oberhalb der Schweissstelle anzuordnende Schweisskopf kann sich beim Schweissen seitlich an der Abkantung des Versteifungssteges abstützen, wobei dann gleichzeitig sichergestellt ist, dass der Schweisspunkt zwischen den beiden, von oben unsichtbaren Sicken angebracht wird. Je nach Bemessung des Schweisskopfes ist eine angepasste Erstreckung der Abkantung erforderlich.

Weiterhin ist die Ausbildung gemäss Anspruch 9 vorteilhaft, da hierdurch ein leichtes Einschieben des Verbindungsprofiles über die entsprechende Kanalwand möglich ist und dennoch eine ordnungsgemässe Positionierung sowie die Vermeidung von Verwerfungen sichergestellt ist.

Um Undichtigkeiten im Bereich der Verbindung zwischen Verbindungsprofilschenkel und eingeschobener Kanalwand völlig auszuschliessen, ist die Merkmalskombination nach Anspruch 10 vorgesehen.

Besonders vorteilhaft ist die Ausbildung nach Anspruch 11.

In Erweiterung der erfindungsgemässen Ausgestaltung ist die Merkmalskombination nach Anspruch 12 vorteilhaft. Dabei sind sämtliche, in den Ansprüchen 1 bis 11 genannte Merkmale auch auf den in der Montagelage aussenliegenden Schenkel anwendbar und vorteilhaft.

Besonders vorteilhaft ist auch die Ausbildung nach Anspruch 13. Durch die Ausbildung als Mutter- und Vater-Form wird eine Klemmwirkung zwischen den Schenkeln und dem eingeschobenen Kanalblech erzeugt, die zwar eine Punktschweissung nicht vollständig überflüssig macht, die aber schon zu einer ausreichenden Vorfixierung der Verbindung führt, wobei in Ausnahmefällen sogar vollständig auf den Punktschweissvorgang verzichtet werden kann. Beim Einschieben des entsprechenden Bleches zwischen die so ausgebildeten Schenkel vollführt das Kanalblech beim Durchlauf der Mutter-Vater-Form der Sicken eine wellenartige Bewegung, bis die Vorderkante des eingeschobenen Kanalwandteiles gegen die Rückwand des Versteifungssteges stösst. Es wird also eine unter Federkraft des Materials stehende Klemmverbindung erzeugt. Zur Verstärkung dieser Wirkung kann die Merkmalskombination nach Anspruch 14 vorgesehen sein. Die Luftkanalbleche sollten dann mindestens derartige Sicken aufweisen, die sich bei vollständig eingeschobenem Luftkanalblech an identischen Stellen befinden, wie die Sicken der Schenkel. Darüber hinaus können die Luftkanalbleche noch im nicht von den Schenkeln übergriffenen Bereich mit Sicken versehen sein, um auf diese Weise Wärmespannungen im Luftkanalblech selber abzufangen und so der Wellenbildung des Luftkanalbleches selbst auch entgegenwirken zu können.

Ein Ausführungsbeispiel der Erfindung ist in der Zeichnung dargestellt.

Das Verbindungsprofil zur stirnseitigen Verbindung von Luftkanälen besteht im wesentlichen aus einem Versteifungssteg 2 und an diesen angebogenen, von diesem rechtwinklig abragenden, einen Einsteckschlitz für die entsprechende Kanalwandung bildenden Schenkeln 3 und 4. Das Verbindungsprofil ist im Ausführungsbeispiel einstückig aus einem Blechstück profiliert, wobei der Versteifungssteg 2 doppelwandig ausgebildet ist, damit zur Verbindung der entsprechenden Verbindungsprofile miteinander zu einem Rahmen entsprechende Eckwinkel in die Hohlräume der Versteifungsstege eingeschoben werden können. Der dem Versteifungssteg 2 abgewandte Schenkel 4 des Verbindungsprofiles weist im Ausführungsbeispiel zwei parallel zur Vorderrandkante des Schenkels 4 verlaufende Sicken 5, 6 auf. Die Sicken sind durch ein entsprechendes Werkzeug beim Profilieren der Verbindungsprofile angeformt. Die Sicken 5, 6 weisen jeweils vom Schenkel 3 gesehen nach aussen gebogene Ausformungen auf. Beide Sicken 5, 6 liegen in dem vom Schenkel 3 überdeckten Bereich. Der Versteifungssteg 6 weist endseitig eine etwa parallel zu den Schenkeln gerichtete Abkantung 7 auf, die einerseits zur Befestigung von Schiebeleisten zur Verbindung benachbarter Verbindungsprofile geeignet ist, andererseits aber eine solche Erstreckung zum freien Ende der Schenkel hin haben soll, dass beim Einsetzen eines üblichen Schweisswerkzeuges zum Punktverschweissen des eingeschobenen Bleches zwischen die Schenkel 3, 4 die Schweissstelle mit Sicherheit zwischen den Sicken 5 und 6 angeordnet ist. Der Schenkel 3 weist endseitig eine Aufkantung 8 auf, die zur Erleichterung des Einführens eines Kanalbleches zwischen die Schenkel 3, 4 dient. Die Biegekante 9 der Aufkantung liegt in Blickrichtung zum freien Ende des Schenkels 3 weiter zum Ende des Schenkels hin als die vordere Sicke 6 im unteren Schenkel 4. Dies ist zwar in der Zeichnung nicht deutlich ersichtlich, jedoch grundsätzlich beabsichtigt. Zur Erzeugung einer sogenannten Flanschverbindung an Luftkanälen wird dieses Verbindungsprofil zunächst mit entsprechenden Eckwinkeln kombiniert zu einem Rahmen zusammengesetzt, der dann auf die entsprechenden Randkanten des anzukoppelnden Luftkanales aufgeschlagen wird. Dabei gleiten die Kanalbleche jeweils zwischen die Schenkel 3, 4, bis sie zur Anlage an die Innenwandung des Versteifungssteges 2 gebracht sind. Nachfolgend wird dann mittels eines Schweissgerätes, das einerseits von oben auf den Schenkel 3 und andererseits von unten auf den Schenkel 4 an einander gegenüberliegenden Stellen einwirkt, verschweisst, wobei durch die Abkantung 7 und die Sicken 5 und 6 eine genaue Positionierung des Schweissgerätes erfolgt, so dass der zu setzende Schweisspunkt bezüglich des unteren Schenkels 4 zwischen den Sicken 5 und 6 angeordnet ist. Es werden auf diese Weise Wellungen des Schenkels 4 im Mündungsbereich praktisch ausgeschlossen.

Die Erfindung ist nicht auf das Ausführungsbeispiel beschränkt, sondern im Rahmen der Offenbarung vielfältig variabel.

## Patentansprüche

1. Verbindungsprofil (1) zur stirnseitigen Verbindung von Luftkanäle, wobei die Luftkanäle aus Blechtafeln rechteckigen Zuschnitts zu polygonalen, zum Beispiel rechteckigen Kanälen gebogen und an der Verbindungsnaht gefalzt sind und die Verbindungsprofile (1) einen Einsteckschlitz bildende Schenkel (3, 4) aufweisen, in welche die Stirnseiten der Luftkanäle einschiebbar und zum Beispiel durch Punktschweissen mit den Schenkeln (3, 4) verbindbar sind, wobei ferner die Verbindungsprofile (1) quer zum Einsteckschlitz verlaufende, nach aussen abragende Versteifungsstege (2) aufweisen, die mit entsprechenden Eckwinkeln zur Bildung eines Profilrahmens verbindbar sind, dadurch gekennzeichnet, dass der dem Versteifungssteg (2) abgewandte Schenkel (4) des Verbindungsprofiles (1) mindestens eine mindestens etwa parallel zur Vorderrandkante des Schenkels (4) verlaufende Sicke (6) in erheblichem Abstand von dem Versteifungssteg (2), zum Beispiel schweisskopfbreiten Abstand, aufweist.

2. Verbindungsprofil nach Anspruch 1, dadurch gekennzeichnet, dass zwei parallel zueinander verlaufende Sicken (5, 6) in dem Schenkel (4) ausgeformt sind, die vom anderen, den Schlitz begrenzenden Schenkel (3) weg verlaufende Ausformung aufweisen.

3. Verbindungsprofil nach einem der Ansprüche 1 oder 2, dadurch gekennzeichnet, dass beide Sicken (5, 6) im vom anderen Schenkel (3) überdeckten Bereich des mit Sicken (5, 6) versehenen Schenkels (4) liegen.

4. Verbindungsprofil nach einem der Ansprüche 1 bis 3, dadurch gekennzeichnet, dass die beiden Sicken (5, 6) einen mindestens schweisskopfbreiten Abstand voneinander aufweisen.

5. Verbindungsprofil nach einem der Ansprüche 1 bis 4, dadurch gekennzeichnet, dass die Sicken (5, 6) über ihren Längsverlauf unterbrochen sind.

6. Verbindungsprofil nach einem der Ansprüche 1 bis 5, dadurch gekennzeichnet, dass die Sickentiefe mindestens der einfachen Schenkelblechstärke entspricht.

7. Verbindungsprofil nach einem der Ansprüche 1 bis 6, dadurch gekennzeichnet, dass die Sickentiefe der 3- bis 4fachen Schenkelblechstärke entspricht.

8. Verbindungsprofil nach einem der Ansprüche 1 bis 7, dadurch gekennzeichnet, dass der Versteifungssteg (2) endseitig eine etwa parallel zu den Schenkeln (3, 4) gerichtete Abkantung (7) aufweist, die höchstens eine dem Abstand der nahegelegenen Sicke (5) vom Steg (2) entsprechende Auskragung aufweist.

9. Verbindungsprofil nach einem der Ansprüche 1 bis 8, dadurch gekennzeichnet, dass der sickenlose Schenkel (3) eine Aufkantung (8) aufweist, deren Biegekante (9) mindestens gering grösseren Abstand vom Versteifungssteg (2) aufweist als die diesem fernliegende Sicke (6).

10. Verbindungsprofil nach einem der Ansprüche 1 bis 9, dadurch gekennzeichnet, dass mindestens in eine Sicke (5, 6) eine Dichtschnur aus elastischem Material eingelegt ist.

11. Verbindungsprofil nach Anspruch 10, dadurch gekennzeichnet, dass die Dichtschnur kreisrunden Querschnitt aufweist und formschlüssig in der Sicke (5, 6) angeordnet ist.

12. Verbindungsprofil nach einem der Ansprüche 1 bis 11, dadurch gekennzeichnet, dass beide Schenkel (3, 4) gemäss einem der Ansprüche 1 bis 11 ausgebildet sind.

13. Verbindungsprofil nach einem der Ansprüche 1 bis 12, dadurch gekennzeichnet, dass die Sicken (5, 6) in beiden Schenkeln (3, 4) an gleichen Stellen und in Mutter- und Vater-Form ausgebildet sind.

14. Verbindungsprofil nach einem der Ansprüche 1 bis 13, dadurch gekennzeichnet, dass die Luftkanalbleche mindestens im Einsteckbereich mit gleichgeformten Sicken versehen sind.

## Claims

1. A connecting section (1) for connecting the ends of air ducts, the air ducts being bent from rectangular sheet-metal blanks into polygonal, for example rectangular ducts and being folded at the joint seam, and the connecting sections (1) having limbs (3, 4) which form an insertion slot into which the end faces of the air ducts can be pushed and connected to the limbs (3, 4), for example by means of spot-welding, and furthermore the connecting sections (1) having outward-projecting stiffening webs (2) which extend transversely relative to the insertion slot and which can be connected to corresponding corner angle pieces to form a sectional frame, characterized in that the limb (4) of the connecting section (1) facing away from the stiffening web (2) has at least one bead (6) extending at least approximately parallel to the front edge of the limb (4) and at a substantial distance from the stiffening web (2), for example at a distance corresponding to the width of a welding head.

2. A connecting section as claimed in Claim 1, characterized in that two beads (5, 6) extending parallel to each other are formed in the limb (4) in a direction extending away from the other limb (3) which defines the slot.

3. A connecting section as claimed in Claim 1 or 2, characterized in that the two beads (5, 6) are located in that region of the limb (4) formed with beads (5, 6) which is covered by the other limb (3).

4. A connecting section as claimed in any one of Claims 1 to 3, characterized in that the two beads (5, 6) are spaced from one another by a distance corresponding at least to the width of a welding head.

5. A connecting section as claimed in any one of Claims 1 to 4, characterized in that the beads (5, 6) are interrupted along their length.

6. A connecting section as claimed in any one of Claims 1 to 5, characterized in that the bead depth corresponds at least to one thickness of the sheet of the limb.

7. A connecting section as claimed in any one of Claims 1 to 6, characterized in that the bead depth is 3 to 4 times the thickness of the sheet of the limb.

8. A connecting section as claimed in any one of Claims 1 to 7, characterized in that the stiffening web (2) has at its end a fold (7) which is directed approximately parallel to the limbs (3, 4) and which projects at most an amount corresponding to the distance between the web (2) and the bead (5) nearer to the web.

9. A connecting section as claimed in any one of Claims 1 to 8, characterized in that the beadless limb (3) has a bent-up portion (8), the bend edge (9) of which is at least a slightly greater distance from the stiffening web (2) than the bead (6) furthest from the web.

10. A connecting section as claimed in any one of Claims 1 to 9, characterized in that a sealing cord of elastic material is inserted into at least one bead (5, 6).

11. A connecting section a claimed in Claim 10, characterized in that the sealing cord has a circular cross-section and is positively seated in the bead (5, 6).

12. A connecting section as claimed in any one of Claims 1 to 11, characterized in that both limbs (3, 4) are designed according to one of Claims 1 to 11.

13. A connecting section as claimed in any one of Claims 1 to 12, characterized in that the beads (5, 6) in the two limbs (3, 4) are formed at the same locations and in male and female form.

14. A connecting section as claimed in any one of Claims 1 to 13, characterized in that the air duct sheets are provided, at least in the insertion region, with beads of identical shape.

## Revendications

1. Profil de jonction (1) pour l'assemblage frontal de conduits à air, ces conduits à air étant constitués par des plaques de tôle découpées en rectangles, pliées et agrafées au niveau de la jonction pour former des conduits polygonaux, par exemple rectangulaires, et les profils de jonction (1) comportant des ailes (3, 4) qui forment une rainure d'insertion et dans lesquelles les côtés frontaux des conduits à air peuvent être insérés et être par exemple fixés aux ailes (3, 4) par soudage par points, les profils de jonction (1) comportant par ailleurs des parties de raidissement (2), orientées transversalement par rapport aux rainures d'insertion et placées à l'extérieur, qui peuvent être assemblées avec des cornières correspondantes pour former un cadre de profil, caractérisé en ce que l'aile (4) du profil de jonction (1) qui se trouve du côté opposé à la partie de raidissement (2) comporte au moins une dépression linéaire (6) sensiblement parallèle au bord avant de l'aile (4) et située à une assez grande distance de la partie de raidissement (2), par exemple à une distance égale à la largeur d'une tête de soudage.

2. Profil de jonction selon la revendication 1, caractérisé en ce que l'aile (4) comporte deux dépressions linéaires (5, 6) qui ont une forme telle qu'elles s'écartent de l'autre aile (3) qui délimite la rainure.

3. Profil de jonction selon l'une des revendications 1 ou 2, caractérisé en ce que les deux dépressions linéaires (5, 6) se trouvent dans la partie de l'aile (4) munie de dépressions linéaires (5, 6) qui est recouverte par l'autre aile (3).

4. Profil de jonction selon l'une des revendications 1 à 3, caractérisé en ce que les deux dépressions linéaires (5, 6) sont séparées l'une de l'autre par au moins la largeur d'une tête de soudage.

5. Profil de jonction selon l'une des revendications 1 à 4, caractérisé en ce que les dépressions linéaires (5, 6) sont interrompues dans le sens de leur longueur.

6. Profil de jonction selon l'une des revendications 1 à 5, caractérisé en ce que la profondeur des dépressions linéaires correspond au moins à une épaisseur de la tôle constituant les ailes.

7. Profil de jonction selon l'une des revendications 1 à 6, caractérisé en ce que la profondeur des dépressions linéaires correspond 3 à 4 fois à l'épaisseur de la tôle constituant les ailes.

8. Profil de jonction selon l'une des revendications 1 à 7, caractérisé en ce que la partie de raidissement (2) présente à son extrémité un rebord plié (7) sensiblement parallèle aux ailes (3, 4) qui comporte au plus une partie en porte à faux correspondant à la distance séparant la dépression linéaire (5) la plus proche de la partie (2).

9. Profil de jonction selon l'une des revendications 1 à 8, caractérisé en ce que l'aile (3) qui ne comporte pas de dépressions linéaires présente une partie pliée (8) dont le pli (9) est à une distance de la partie de raidissement au moins légèrement supérieure à la distance de la dépression linéaire (6) la plus éloignée.

10. Profil de jonction selon l'une des revendications 1 à 9, caractérisé en ce que l'une des dépressions linéaires (5, 6) au moins contient un cordon d'étanchéité en matériau élastique.

11. Profil de jonction selon la revendication 10, caractérisé en ce que le cordon d'étanchéité a une section circulaire et s'engage dans la dépression linéaire (5, 6) par encastrement.

12. Profil de jonction selon l'une des revendications 1 à 12, caractérisé en ce que les dépressions linéaires (5, 6) ont la même position dans les deux ailes (3, 4) et ont la forme de parties mâle et femelle.

14. Profil de jonction selon l'une des revendications 1 à 13, caractérisé en ce que les tôles qui constituent le conduit à air comportent, au moins dans la zone d'insertion, des dépressions linéaires de même forme.

FIG 1